# EUROPEAN PATENT APPLICATION

(11) **EP 4 645 002 A1**
(43) Date of publication of application: **05.11.2025**
(21) Application number: 25172110.6
(22) Date of filing: 24.04.2025
(51) Int. Cl.: G04C 10/00, G04C 3/14

(54) **ELECTRONIC TIMEPIECE**

(30) Priority: 26.04.2024 JP 2024072333
(71) Applicant: Seiko Epson Corporation, Tokyo 160-8801 (JP)
(72) Inventor: FUJISAWA, Teruhiko, Suwa-shi, Nagano, 392-8502 (JP)
(74) Representative: MERH-IP Matias Erny Reichl Hoffmann Patentanwälte PartG mbB

(57) **Abstract**

An electronic timepiece includes a dial, a pointer shaft that is disposed at a center of the dial, a hour hand, a minute hand, and a seconds hand that are attached to the pointer shaft and that display time, a first train wheel that includes a conductive gear and that is coupled to the hour hand, the minute hand, and the seconds hand, a first motor that includes a first motor coil and that drives the hour hand, the minute hand, and the seconds hand via the first train wheel, an annular charging coil that has a central axis parallel to the pointer shaft, and a secondary battery that is charged through wireless power supply from an external charger via the charging coil and that supplies power to the first motor, and the secondary battery, the first motor coil, and the first train wheel are disposed at positions that do not overlap each other in plan view.

## Description

### BACKGROUND

### 1. Technical Field

The present disclosure relates to an electronic timepiece.

### 2. Related Art

JP-A-2011-21929 discloses a structure of a timepiece in which a charging coil is provided to face a case back and power can be charged to a secondary battery through electromagnetic induction from an external charger. As the secondary battery, a battery having a large diameter is generally used such that the secondary battery can be driven for approximately 6 months from full charge.

However, in the method described in JP-A-2011-21929, when the secondary battery having a large diameter is used, as the conductive secondary battery and a conductive motor coil or a train wheel overlap each other, the secondary battery is substantially equivalent to a metal component having a large thickness, and magnetic flux of the charging coil is blocked. Thus, there is a problem in which charging efficiency is decreased.

### SUMMARY

According to an aspect of the present disclosure, there is provided an electronic timepiece including a dial, a pointer shaft that is disposed at a center of the dial, a first pointer that is attached to the pointer shaft and that displays time, a first train wheel that includes a conductive gear and that is coupled to the first pointer, a first motor that includes a first motor coil and that drives the first pointer via the first train wheel, an annular charging coil that has a central axis parallel to the pointer shaft, and a secondary battery that is charged through wireless power supply from an external charger via the charging coil and that supplies power to the first motor, in which the secondary battery, the first motor coil, and the first train wheel are disposed at positions that do not to overlap each other in plan view.

According to another aspect of the present disclosure, there is provided an electronic timepiece including a dial, a pointer shaft that is disposed at a center of the dial, a first pointer that is attached to the pointer shaft and that displays time, a first train wheel that includes a conductive gear and that is coupled to the first pointer, a first motor that includes a first motor coil and that drives the first pointer via the first train wheel, an annular charging coil that has a central axis parallel to the pointer shaft, and a secondary battery that is charged through wireless power supply from an external charger via the charging coil and that supplies power to the first motor, in which the secondary battery, the first motor coil, and the first train wheel are disposed at positions that do not to overlap each other inside the charging coil in plan view.

### BRIEF DESCRIPTION OF THE DRAWINGS

FIG. 1 is a plan view illustrating a configuration of a timepiece according to a first embodiment.
FIG. 2 is a plan view illustrating an internal configuration of the timepiece.
FIG. 3 is a cross-sectional view taken along line III-III of the timepiece illustrated in FIG. 2.
FIG. 4A is a perspective view illustrating a configuration of a charging coil and a case back.
FIG. 4B is a perspective view illustrating the configuration of the charging coil.
FIG. 5 is a block diagram illustrating an electrical configuration of the timepiece.
FIG. 6A is a schematic view illustrating wireless power supply of the timepiece.
FIG. 6B is a view illustrating wireless power supply using electromagnetic induction.
FIG. 6C is a perspective view illustrating a configuration of an external charger.
FIG. 7 is a plan view illustrating an internal configuration of a timepiece according to a second embodiment.
FIG. 8 is a cross-sectional view of the timepiece taken along line VIII-VIII illustrated in FIG. 7.
FIG. 9 is a cross-sectional view illustrating a configuration of a timepiece of a modification example.
FIG. 10 is a perspective view illustrating an external charger of another modification example.

### DESCRIPTION OF EMBODIMENTS

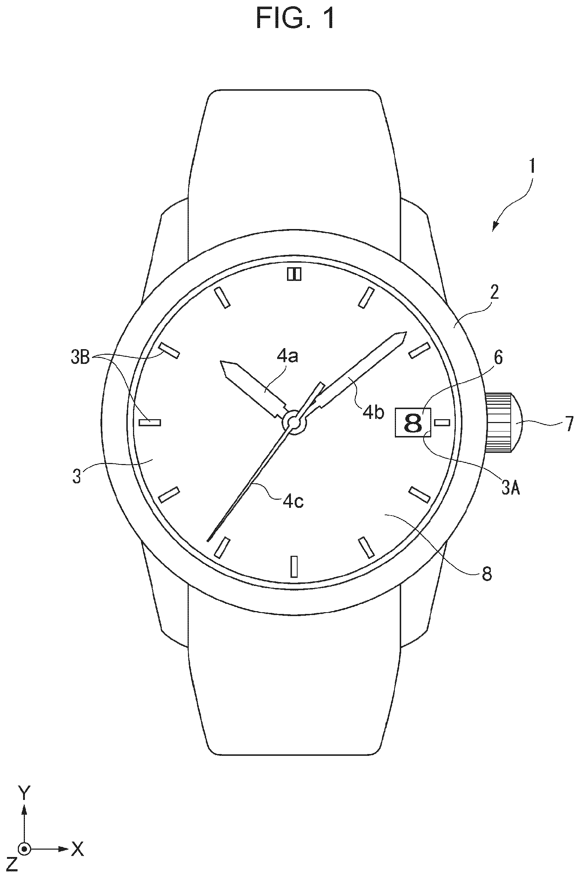

First, a configuration of an electronic timepiece 1 of a first embodiment will be described with reference to FIG. 1.

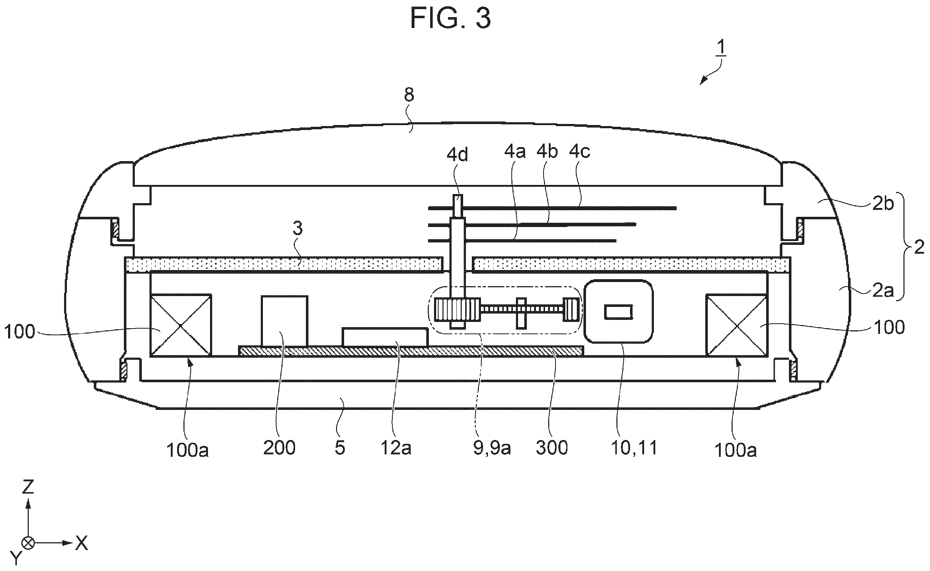

As illustrated in FIG. 1, the electronic timepiece 1 is a wristwatch worn on a wrist of a user. The electronic timepiece 1 includes a cylindrical case 2 (see FIG. 3), and a dial 3 is disposed on an inner peripheral side of the case 2. Among two openings of the case 2, an opening on a front surface side is closed with a cover glass 8 which is a wind deflector member, and an opening on a back surface side is closed with a case back 5 (see FIG. 3).

The electronic timepiece 1 includes the dial 3, a movement (not illustrated), a hour hand 4a, a minute hand 4b, and a seconds hand 4c that are a first pointer and a second pointer for displaying time, all of which are accommodated in the case 2. The dial 3 is provided with, for example, a calendar small window 3A, and a date indicator 6 can be visually recognized from the calendar small window 3A. In addition, the dial 3 is provided with an indicator 3B for indicating time. The dial 3 of the first embodiment is a non-conductive member such as polycarbonate.

A crown 7 is provided on a side surface of the case 2. For example, the crown 7 can be pulled out and moved from a 0-stage position pressed toward a center of the electronic timepiece 1 to a 1-stage position and a 2-stage position. For example, when the crown 7 is pulled and rotated to the 1-stage position, the date can be adjusted by moving the date indicator 6. When the crown 7 is pulled to the 2-stage position, the seconds hand 4c stops, and when the crown 7 is rotated at the 2-stage position, the hour hand 4a and the minute hand 4b move and time can be adjusted.

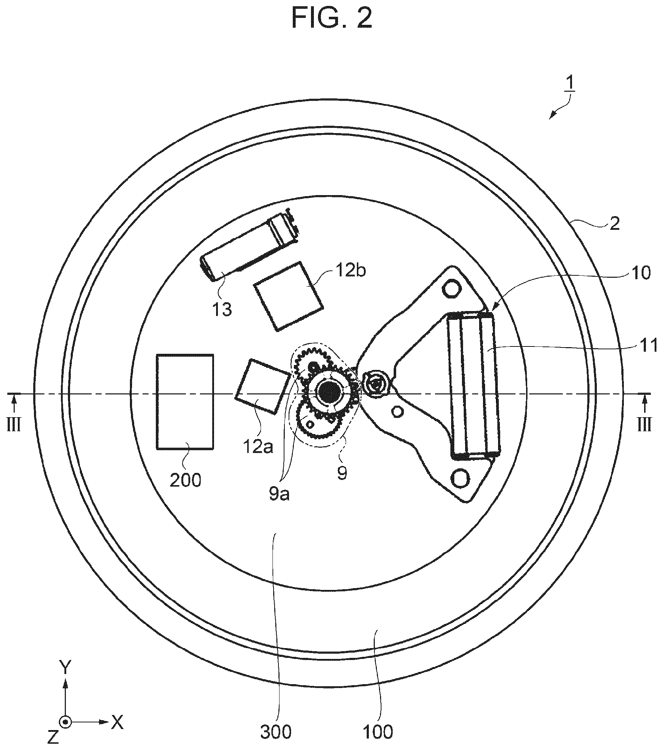

Next, an internal configuration of the electronic timepiece 1 will be described with reference to FIGS. 2 and 3. FIG. 2 illustrates an internal configuration where the cover glass 8 and the dial 3 are removed.

As illustrated in FIGS. 2 and 3, the electronic timepiece 1 includes the dial 3, a pointer shaft 4d disposed at a center of the dial 3, each of the hands 4a, 4b, and 4c attached to the pointer shaft 4d, a first train wheel 9 coupled to each of the hands 4a, 4b, and 4c, a first motor 10 coupled to the hands 4a, 4b, and 4c via the first train wheel 9, an annular charging coil 100, and a secondary battery 200 charged via the charging coil 100.

In addition, the electronic timepiece 1 includes the case 2 that has a tubular opening, the case back 5 disposed under the case 2, that is, in a -Z-direction, a printed wired board 300 disposed above the case back 5, and the cover glass 8 disposed above the printed wired board 300 via the dial 3.

The first train wheel 9 is configured to include a plurality of gears 9a. All the gears or at least one gear of the plurality of gears 9a are made of a conductive material such as a metal.

The first motor 10 has a first motor coil 11. As described above, the first motor 10 drives each of the hands 4a, 4b, and 4c via the first train wheel 9.

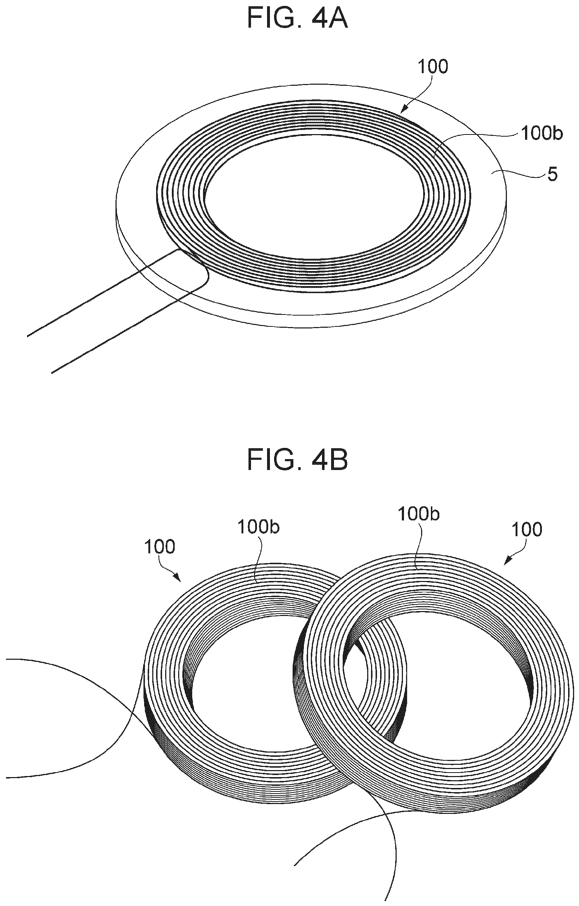

As illustrated in FIGS. 4A and 4B, the charging coil 100 is formed in an annular shape. The charging coil 100 is wound such that a central axis thereof is parallel to the pointer shaft 4d, in other words, a coil 100b is in an annular shape along an inner diameter of the case 2. In order to improve a power receiving performance, it is preferable that the charging coil 100 is a type having a thick wire diameter, a low resistance rate, and a thickness (see FIG. 4B).

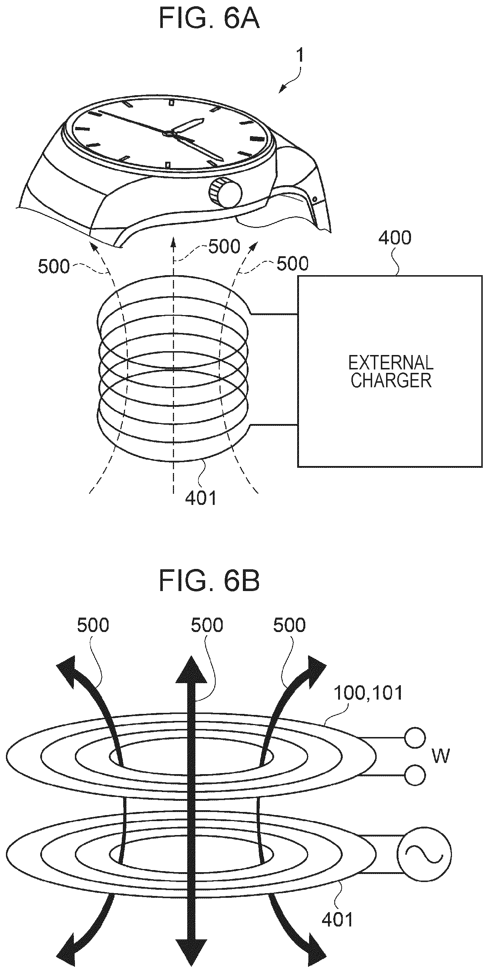

The secondary battery 200 is charged by wireless power supply from an external charger 400 (see FIG. 6A). The secondary battery 200 supplies power to the first motor 10. The secondary battery 200 is a surface-mounted type all-solid-state battery. By using the all-solid-state battery as the secondary battery 200, rapid charging can be performed, and a charging time can be shortened. A capacity of the secondary battery 200 is, for example, approximately 0.5 mAh. A sealing package of the secondary battery 200 is preferably, for example, ceramics through which magnetic flux 500 passes.

The case 2 includes a case body 2a and a bezel 2b fixed above the case body 2a. The bezel 2b may be disposed to be rotatable with respect to the case body 2a. The case body 2a and the bezel 2b are made of a conductive metal material. Examples of the conductive metal material include stainless steel and titanium.

The case back 5 is made of a metal material having waterproofness. Examples of the metal material include stainless steel and titanium. By making the case back 5 a metal material, a waterproof performance can be improved.

The printed wired board 300 is disposed inside the annular charging coil 100. A control IC 12, the secondary battery 200, and a crystal oscillator 13 are mounted on the printed wired board 300. The cover glass 8 is held by the bezel 2b.

The control IC 12 has a charging control IC 12a and a central control IC 12b. The charging control IC 12a performs control related to a charging system including the charging coil 100 and the secondary battery 200, for example. The central control IC 12b performs control related to the entire electronic timepiece 1, for example.

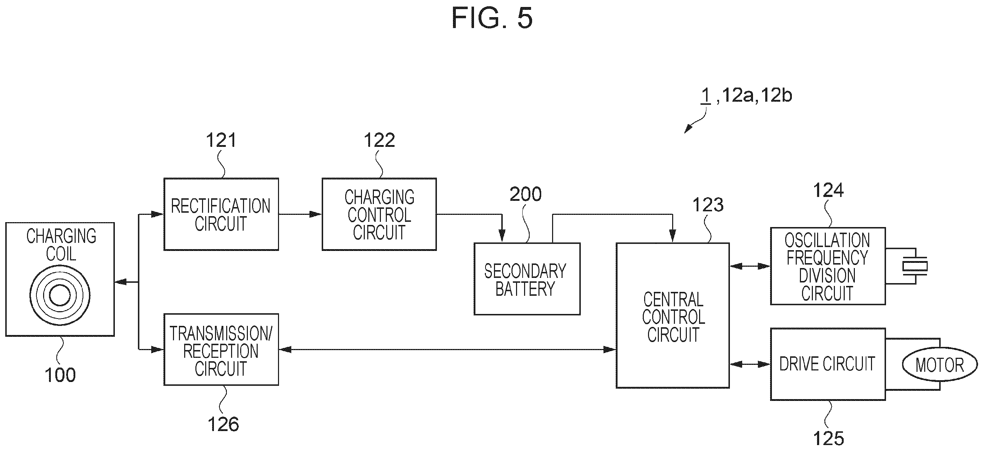

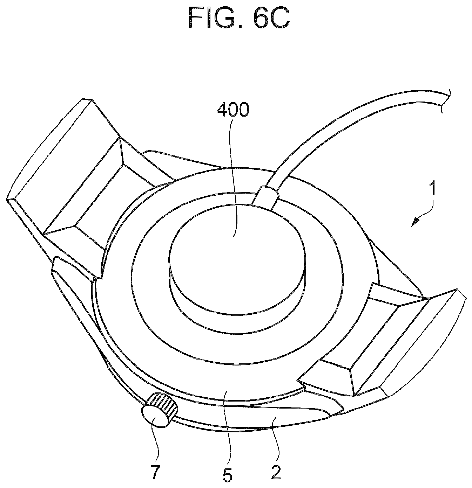

Next, a principle of power transmission of wireless power supply using an electromagnetic induction method, that is, non-contact power supply will be described with reference to FIGS. 5, 6A, 6B, and 6C.

As illustrated in FIG. 6B, in the wireless power supply using the electromagnetic induction method, an alternating current voltage is supplied to a power transmission coil 401, and an induced electromotive force W is generated as the magnetic flux 500 generated in the power transmission coil 401 interlinks with a power reception coil 101, so that the power W is supplied to the secondary battery 200.

In order to efficiently supply the power W, it is important to supply the magnetic flux 500 generated in the power transmission coil 401 to the power reception coil 101 without hindering the magnetic flux 500. Since a metal component is used in the electronic timepiece 1, the metal component hinders the magnetic flux 500. A large eddy current is generated in a metal component having a particularly large volume, so that a loss increases.

The metal component having a large loss is the secondary battery 200. Next, a motor coil and a train wheel having a metal gear are the metal components having a large loss. By disposing these components to form a gap without overlapping as much as possible, the magnetic flux 500 in the power reception coil 101 of the electronic timepiece 1 can be increased, and the large induced electromotive force W can be obtained.

As illustrated in FIG. 5, the electronic timepiece 1 has the charging coil 100, a rectification circuit 121, a charging control circuit 122, the secondary battery 200, a central control circuit 123, an oscillation frequency division circuit 124, a drive circuit 125, and a transmission/reception circuit 126.

The charging coil 100 receives energy generated between the charging coil 100 and the external charger 400 (see FIG. 6C), that is, power by using electromagnetic induction (see FIG. 6A and FIG. 6B). The rectification circuit 121 converts alternating current power received by the charging coil 100 into direct current power.

The charging control circuit 122 prevents overcharging of the secondary battery 200. In addition, when the charging of the secondary battery 200 is completed, the charging control circuit 122 performs control such as turning off of a transistor such that charging energy does not enter the secondary battery 200. The secondary battery 200 charges alternating current power converted by the rectification circuit 121.

The central control circuit 123 monitors alternating current power charged to the secondary battery 200, received power, and the like. The transmission/reception circuit 126 transmits and receives a transmission/reception signal to and from the external charger 400 as necessary. The external charger 400 controls transmission power, that is, controls power, with a received feedback signal. Examples of the feedback signal include an ID number, an authentication signal, error information, received power, and a stop signal. The oscillation frequency division circuit 124 generates a frequency. The drive circuit 125 drives the first motor 10.

The external charger 400 is intermittently started to check the presence or absence of the electronic timepiece 1 close to the external charger 400. When the external charger 400 recognizes the electronic timepiece 1 and succeeds in authentication, the external charger 400 starts a power transmission operation. The external charger 400 maintains the power transmission operation until the presence of the electronic timepiece 1 cannot be checked or a power transmission stop signal from the electronic timepiece 1 is received.

As described above, the external charger 400 and the electronic timepiece 1 perform power transmission by bringing coils built in each of the external charger 400 and the electronic timepiece 1 adjacent to each other, sharing the magnetic flux 500, and joining the coils to each other. The external charger 400 and the electronic timepiece 1 perform communication via the coils in addition to power transmission.

As described above, the printed wired board 300, the secondary battery 200, the first motor coil 11, and the first train wheel 9 are disposed inside the charging coil 100 in plan view, and the secondary battery 200, the first motor coil 11, and the first train wheel 9 are disposed at positions that do not overlap each other in plan view. As described above, by disposing the secondary battery 200, the first motor coil 11, and the first train wheel 9, which are metal components, not to overlap each other in the same direction with respect to the direction of the magnetic flux 500, hindrance of the magnetic flux 500 in the charging coil 100 can be suppressed. Accordingly, a decrease in charging efficiency can be suppressed.

In addition, as illustrated in FIG. 3, since a first surface 100a of the charging coil 100 on a case back 5 side is positioned on the case back 5 side of the secondary battery 200, the first motor coil 11, and the first train wheel 9, the charging coil 100 can be brought closer to the power transmission coil 401, that is, an external charger 400 side, and a decrease in charging efficiency can be suppressed.

In addition, since the case 2 is configured by the case body 2a and the bezel 2b, a loss of the magnetic flux 500 caused by an eddy current can be suppressed, and charging efficiency can be improved, compared to a case where the case 2 is configured by one metal component. In addition, by disposing an insulating packing, which is also waterproof, between the case body 2a and the bezel 2b and between the case body 2a and the case back 5, flow of a large amount of current such as an eddy current can be suppressed.

In addition, since the printed wired board 300, the first motor 10, and the first train wheel 9 are disposed inside the annular charging coil 100, the electronic timepiece 1 can be made thin, for example, compared to a structure in which the charging coil 100 and each component are disposed in an overlapping manner.

In addition, even when the case back 5, the secondary battery 200, the first motor coil 11, the first train wheel 9, and the like are made of a metal material, the dial 3 is made of a non-conductive member. Thus, a decrease in charging efficiency caused by blocking of the magnetic flux 500 can be suppressed, for example, compared to a case where the dial 3 is made of a metal material.

As described above, the electronic timepiece 1 of the first embodiment includes the dial 3, the pointer shaft 4d disposed at the center of the dial 3, the hour hand 4a, the minute hand 4b, and the seconds hand 4c, which are attached to the pointer shaft 4d and which display time, the first train wheel 9 which includes the conductive gears 9a and which is coupled to the hour hand 4a, the minute hand 4b, and the seconds hand 4c, the first motor 10 which includes the first motor coil 11 and which drives the hour hand 4a, the minute hand 4b, and the seconds hand 4c via the first train wheel 9, the annular charging coil 100 of which the central axis is parallel to the pointer shaft 4d, and the secondary battery 200 which is charged through wireless power supply from the external charger 400 via the charging coil 100 and which supplies power to the first motor 10, and the secondary battery 200, the first motor coil 11, and the first train wheel 9 are disposed at positions that do not overlap each other in plan view.

With this configuration, since the secondary battery 200, the first motor coil 11, and the first train wheel 9, which are metal components, are disposed not to overlap each other in plan view, blocking of passage of the magnetic flux 500 being surrounded by the annular charging coil 100 can be suppressed. Accordingly, a decrease in charging efficiency can be suppressed.

In addition, in the electronic timepiece 1 of the first embodiment, the conductive case 2 that has a tubular opening and the case back 5 that closes the opening are included, and the first surface 100a of the charging coil 100 on the case back 5 side is preferably positioned on the case back 5 side of the secondary battery 200, the first motor coil 11, and the first train wheel 9. With this configuration, since the first surface 100a of the charging coil 100 is disposed on the case back 5 side of other metal components such as the secondary battery 200, the first motor coil 11, and the first train wheel 9, the charging coil 100 can be brought closer to the power transmission coil 401, that is, the external charger 400 side, and a decrease in charging efficiency can be suppressed.

In addition, in the electronic timepiece 1 of the first embodiment, the conductive case 2 that has a tubular opening is included, and the case 2 preferably includes the case body 2a and the bezel 2b that holds the cover glass 8 and that is fixed to the case body 2a. With this configuration, since the case 2 is configured by a plurality of metal components, a loss of the magnetic flux 500 caused by an eddy current can be suppressed, and charging efficiency can be improved, compared to a case where the case 2 is configured by one metal component.

In addition, in the electronic timepiece 1 of the first embodiment, it is preferable that the secondary battery 200 is an all-solid-state battery. With this configuration, since the all-solid-state battery is used as the secondary battery 200, rapid charging can be performed, and a charging time can be shortened.

In the electronic timepiece 1 of the first embodiment, the control IC 12 and the printed wired board 300 on which the control IC 12 is mounted are included, it is preferable that the secondary battery 200 is a surface-mounted type and is mounted on the printed wired board 300, and it is preferable that the printed wired board 300, the first motor 10, and the first train wheel 9 are disposed inside the charging coil 100 in plan view. With this configuration, since the printed wired board 300, the first motor 10, and the first train wheel 9 are disposed inside the annular charging coil 100, the electronic timepiece 1 can be made thin, for example, compared to a structure in which the charging coil 100 and each component are disposed in an overlapping manner.

In addition, the electronic timepiece 1 of the first embodiment includes the dial 3, the pointer shaft 4d disposed at the center of the dial 3, the hour hand 4a, the minute hand 4b, and the seconds hand 4c, which are attached to the pointer shaft 4d and which display time, the first train wheel 9 which includes the conductive gears 9a and which is coupled to the hour hand 4a, the minute hand 4b, and the seconds hand 4c, the first motor 10 which includes the first motor coil 11 and which drives the hour hand 4a, the minute hand 4b, and the seconds hand 4c via the first train wheel 9, the annular charging coil 100 of which the central axis is parallel to the pointer shaft 4d, and the secondary battery 200 which is charged through wireless power supply from the external charger 400 via the charging coil 100 and which supplies power to the first motor 10, and the secondary battery 200, the first motor coil 11, and the first train wheel 9 are disposed at positions that do not overlap each other inside the charging coil 100 in plan view.

With this configuration, since the secondary battery 200, the first motor coil 11, and the first train wheel 9 are disposed inside the annular charging coil 100, the electronic timepiece 1 can be made thin, for example, compared to a structure in which the charging coil 100 and each metal component are disposed in an overlapping manner. In addition, since the metal components do not overlap each other, a decrease in the magnetic flux 500 can be suppressed.

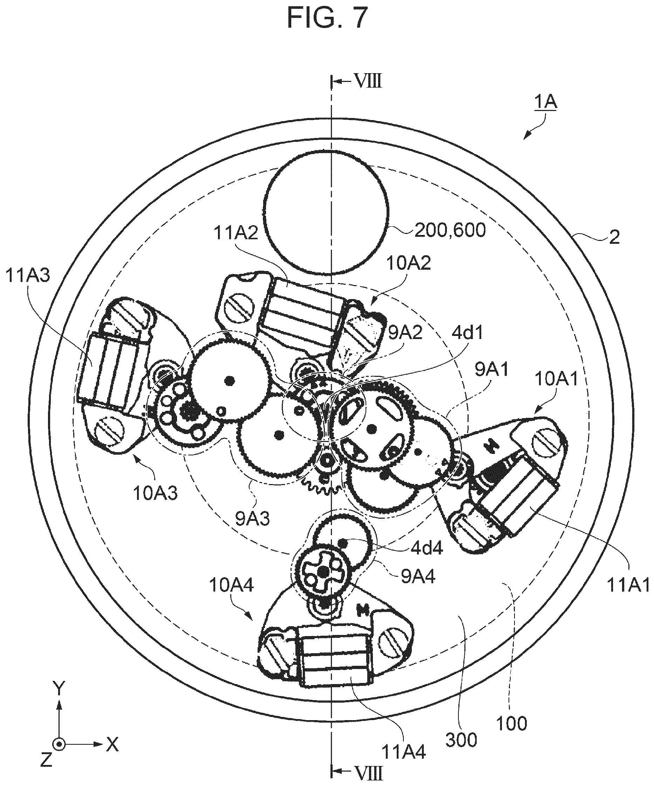

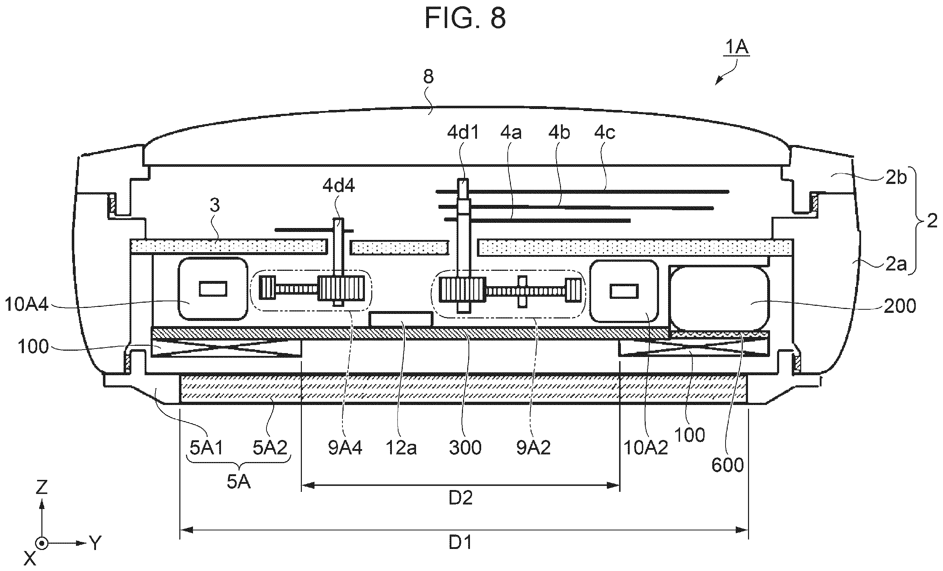

Next, a configuration of an electronic timepiece 1A according to a second embodiment will be described with reference to FIGS. 7 and 8.

The electronic timepiece 1A of the second embodiment is different from the electronic timepiece 1 of the first embodiment in terms of a portion including a plurality of second motors 10A1 to 10A4 and a plurality of second train wheels 9A1 to 9A4. For this reason, in the second embodiment, portions different from those in the first embodiment will be described in detail, and the other overlapping portions will be omitted as appropriate.

As illustrated in FIGS. 7 and 8, the electronic timepiece 1A of the second embodiment includes the dial 3, a pointer shaft 4d1 disposed at the center of the dial 3, and a pointer shaft 4d4 disposed around the dial 3. In addition, the electronic timepiece 1A includes the plurality of second train wheels 9A1, 9A2, 9A3, and 9A4 coupled to the pointer shafts 4d1 and 4d4. The plurality of second train wheels 9A1, 9A2, 9A3, and 9A4 are made of a conductive metal material.

The second train wheel 9A1 is coupled to the second motor 10A1 having a second motor coil 11A1. The second train wheel 9A2 is coupled to a second motor 10A2 having a second motor coil 11A2. The second train wheel 9A3 is coupled to the second motor 10A3 having a second motor coil 11A3. The second train wheel 9A4 is coupled to the second motor 10A4 having a second motor coil 11A4.

In addition, the electronic timepiece 1A includes the annular charging coil 100 and the secondary battery 200 charged via the charging coil 100. The charging coil 100 of the second embodiment is, for example, a sheet-shaped thin type having a flexible printed wiring substrate base having a thickness of approximately 0.3 mm. Accordingly, the charging coil 100 can be disposed to overlap the secondary battery 200 or other metal components. The secondary battery 200 is, for example, a coin-shaped battery having a diameter of approximately 6 mm, which is a metal can made of stainless steel. The battery which is the metal can is inexpensive, and a battery capacity can be increased since the thickness of the container itself is thin insofar as an outer diameter size is the same, compared to the all-solid-state battery having the ceramic package of the first embodiment.

In addition, a case back 5A of the electronic timepiece 1A of the second embodiment has a conductive portion 5A1 and a non-conductive portion 5A2 surrounded by the conductive portion 5A1. The non-conductive portion 5A2 is made of, for example, glass through which the magnetic flux 500 efficiently passes. Without being limited to glass, the non-conductive portion 5A2 may be made of ceramics, plastic, or the like. An outer diameter D1 of the non-conductive portion 5A2 is larger than an inner diameter D2 of the charging coil 100. In addition, the case back 5A may be entirely configured by the non-conductive portion 5A2 and may not be configured by the conductive portion 5A1. The dial 3 of the second embodiment is made of, for example, a metal component.

As described above, although the dial 3 is a conductive metal component, the case back 5 includes a glass portion. Therefore, for example, charging efficiency of the charging coil 100 can be improved compared to a case where both the dial 3 and the case back 5 are metal components. In addition, since the dial 3 is a metal component, aesthetic appearance can be improved compared to a dial made of a resin.

As illustrated in FIG. 8, the charging coil 100 is disposed under the printed wired board 300. The printed wired board 300 is not disposed under the secondary battery 200. A magnetic sheet 600 made of a high magnetic permeability material is disposed between the secondary battery 200 and the charging coil 100.

The magnetic sheet 600 has a function of bundling the magnetic flux 500 in the magnetic sheet 600. When there is no magnetic sheet 600 between the secondary battery 200 and the charging coil 100, an eddy current is generated from the magnetic flux 500 penetrating a metal material. When the eddy current is generated, a magnetic field in an opposite direction is generated in the charging coil 100, and the magnetic flux 500 is canceled out. Accordingly, by disposing the magnetic sheet 600, the canceling-out of the magnetic flux 500 can be suppressed without being affected by the eddy current.

As illustrated in FIG. 7, in the electronic timepiece 1A that has the plurality of second motor coils 11A1 to 11A4 and the plurality of second motors 10A1 to 10A4, in other words, that requires a large space, the secondary battery 200 and the second motor coils 11A1 to 11A4 are disposed to overlap the charging coil 100 in plan view. However, the secondary battery 200, the second motor coils 11A1 to 11A4, and the second train wheels 9A1 to 9A4 are disposed at positions that do not overlap each other in plan view. As described above, since the secondary battery 200, the second motor coils 11A1 to 11A4, and the second train wheels 9A1 to 9A4, which are made of a metal material, are disposed not to overlap each other in plan view, blocking of passage of the magnetic flux 500 being surrounded by the annular charging coil 100 can be suppressed. Accordingly, a decrease in charging efficiency can be suppressed.

As described above, in the electronic timepiece 1A of the second embodiment, it is preferable that the case back 5A is included, the dial 3 has conductivity, the case back 5A has the non-conductive portion 5A2, and the outer diameter D1 of the non-conductive portion 5A2 is larger than the inner diameter D2 of the charging coil 100. With this configuration, since the dial 3 has conductivity, aesthetic appearance can be improved compared to the dial 3 made of a resin. In addition, although the dial 3 has conductivity, the case back 5A includes the non-conductive portion 5A2. Therefore, for example, charging efficiency of the charging coil 100 can be improved compared to a case where both the dial 3 and the case back 5A have conductivity.

In addition, in the electronic timepiece 1A of the second embodiment, the hour hand 4a, the minute hand 4b, and the seconds hand 4c that display time or information, the plurality of second train wheels 9A1 to 9A4 that include the conductive gears 9a and that are coupled to the hour hand 4a, the minute hand 4b, and the seconds hand 4c, and the plurality of second motors 10A1 to 10A4 that include the second motor coils 11A1 to 11A4 and that drive the hour hand 4a, the minute hand 4b, and the seconds hand 4c via the second train wheels 9A1 to 9A4 are included, and the secondary battery 200, the second motor coils 11A1 to 11A4, and the second train wheels 9A1 to 9A4 are preferably disposed at positions that do not overlap each other in plan view. With this configuration, since the secondary battery 200, the second motor coils 11A1 to 11A4, and the second train wheels 9A1 to 9A4, which are metal components, are disposed not to overlap each other in plan view, blocking of passage of the magnetic flux 500 being surrounded by the annular charging coil 100 can be suppressed. Accordingly, a decrease in charging efficiency can be suppressed.

Hereinafter, modification examples of the embodiments described above will be described.

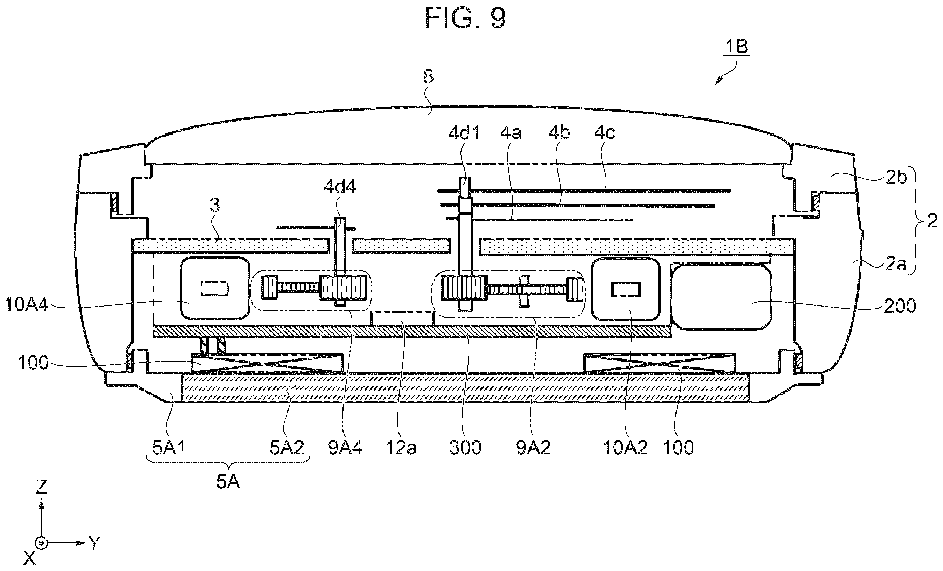

As in the second embodiment described above, the charging coil 100 is not limited to being disposed under the printed wired board 300 and may be disposed to be stuck to the case back 5A as illustrated in FIG. 9. Specifically, the thin type charging coil 100 is configured to be integrated with the non-conductive portion 5A2 made of glass. With this configuration, since a distance to the power transmission coil 401 of the external charger 400 is shortened, charging efficiency can be increased.

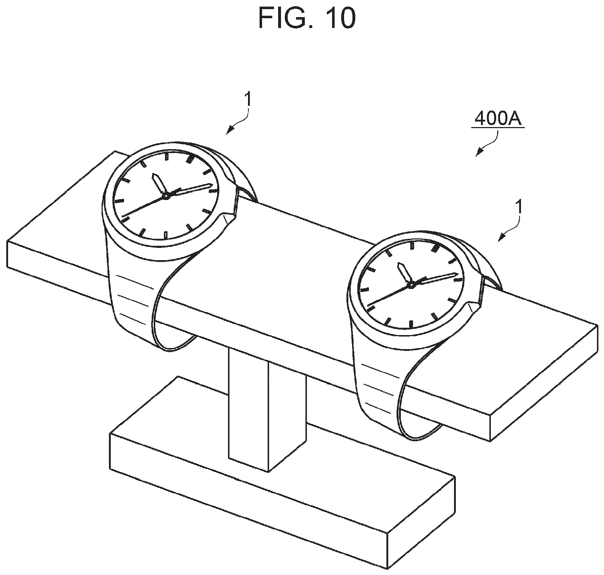

As described above, the external charger 400 is not limited to the form illustrated in FIG. 6C and may be as illustrated in FIG. 10. As illustrated in FIG. 10, an external charger 400A of a modification example uses a holder for storing the electronic timepiece 1. The power transmission coil 401 is embedded in the holder to which the electronic timepiece 1 is hung. Accordingly, the electronic timepiece 1 can also be charged when stored.

## Claims

1. An electronic timepiece comprising:
a dial;
a pointer shaft that is disposed at a center of the dial;
a first pointer that is attached to the pointer shaft and that displays time;
a first train wheel that includes a conductive gear and that is coupled to the first pointer;
a first motor that includes a first motor coil and that drives the first pointer via the first train wheel;
an annular charging coil that has a central axis parallel to the pointer shaft; and
a secondary battery that is charged through wireless power supply from an external charger via the charging coil and that supplies power to the first motor, wherein
the secondary battery, the first motor coil, and the first train wheel are disposed at positions that do not to overlap each other in plan view.

2. The electronic timepiece according to claim 1, further comprising:
a conductive case that has a tubular opening; and
a case back that closes the opening, wherein
a first surface of the charging coil on a case back side is positioned on the case back side of the secondary battery, the first motor coil, and the first train wheel.

3. The electronic timepiece according to claim 1, further comprising:
a case back, wherein
the dial has conductivity,
the case back has a non-conductive portion, and
an outer diameter of the non-conductive portion is larger than an inner diameter of the charging coil.

4. The electronic timepiece according to claim 1, further comprising:
a conductive case that has a tubular opening, wherein
the case includes a case body and a bezel that holds a wind deflector member and that is fixed to the case body.

5. The electronic timepiece according to claim 1, wherein
the secondary battery is an all-solid-state battery.

6. The electronic timepiece according to claim 5, further comprising:
a control IC; and
a printed wired board on which the control IC is mounted, wherein
the secondary battery is a surface-mounted type and is mounted on the printed wired board, and
the printed wired board, the first motor, the first train wheel are disposed inside the charging coil in plan view.

7. The electronic timepiece according to claim 1, further comprising:
a plurality of second pointers that display time or information;
a plurality of second train wheels, each of which includes a conductive gear and is coupled to each of the second pointers; and
a plurality of second motors that include a second motor coil and that drive the second pointers via the second train wheels, wherein
the secondary battery, the second motor coils, and the second train wheels are disposed at positions that do not overlap each other in plan view.

8. An electronic timepiece comprising:
a dial;
a pointer shaft that is disposed at a center of the dial;
a first pointer that is attached to the pointer shaft and that displays time;
a first train wheel that includes a conductive gear and that is coupled to the first pointer;
a first motor that includes a first motor coil and that drives the first pointer via the first train wheel;
an annular charging coil that has a central axis parallel to the pointer shaft; and
a secondary battery that is charged through wireless power supply from an external charger via the charging coil and that supplies power to the first motor, wherein
the secondary battery, the first motor coil, and the first train wheel are disposed at positions that do not to overlap each other inside the charging coil in plan view.
